# NEUE EUROPÄISCHE PATENTSCHRIFT

(11) **EP 2 811 876 B2**
(45) Veröffentlichungstag und Bekanntmachung des Hinweises auf die Entscheidung über den Einspruch: **21.02.2024**
(45) Hinweis auf die Patenterteilung: 06.01.2016
(21) Anmeldenummer: 13700099.8
(22) Anmeldetag: 09.01.2013
(51) Int. Cl.: A47J 31/44, A47J 31/42, A47J 31/06, A23F 5/26

(54) **KAFFEEMASCHINE SOWIE VERFAHREN ZUM BETRIEB EINER SOLCHEN KAFFEEMASCHINE**
COFFEE MAKER AND METHOD FOR OPERATING SAME
MACHINE À CAFÉ AINSI QUE PROCÉDÉ POUR FAIRE FONCTIONNER UNE TELLE MACHINE À CAFÉ

(30) Priorität: 08.02.2012 CH 170122012
(43) Veröffentlichungstag der Anmeldung: 17.12.2014
(73) Patentinhaber: WMF GmbH, 73312 Geislingen/Steige (DE)
(72) Erfinder: GÖLTENBOTH, Frank, 89134 Blaustein (DE); RIETHMÜLLER, Gert, 73312 Geislingen / Steige (DE)
(74) Vertreter: IPrime Rentsch Kaelin AG
(86) Internationale Anmeldenummer: PCT/EP2013/050309
(87) Internationale Veröffentlichungsnummer: WO 2013/117362

(56) Entgegenhaltungen:
- EP-A1- 1 955 624
- EP-A2- 0 419 398
- WO-A1-93/20736
- WO-A1-99/12456
- WO-A1-02/051290
- WO-A1-03/079875
- WO-A1-2013/117362
- CH-A5- 673 211
- CN-A- 101 716 051
- CN-B- 101 849 777
- CN-U- 201 578 093
- DE-A1- 1 454 200
- DE-A1- 1 654 949
- DE-A1-102010 017 224
- DE-A1-102011 008 095
- DE-T2- 69 812 377
- DE-T2-602005 001 149
- FR-A1- 2 142 885
- US-A1- 2010 080 886
- Artikel "Espresso'? auf www.wikipedia.org: Auszug vom 6-02-2018. 18:20
- Artikel "Espresso tamping" aufwww.coffeeresearch.org; Auszug vom 6-02-2018 18:06
- Sonderdruck "Hybridmaschinentest" aus Coffee Business. Ausgabe 8/2015
- Produktbeschreibung einer Siebträgermaschine von Donlin Model CM-4637(Erscheinungsdatum April 2011)
- Kopie des Beschlusses des Landgerichts München I zur Durchführung des selbstständigen Beweisverfahrens gemäß § 485 ff. ZPO (Az. 7 OH 3251/18) vom 9 03-2018
- Kopie unter A1 genannten Beschlusses für den Gerichtsvollzieher am Amtsgericht Hamburg zur Durchführung der Begutachtung der Kaffeemaschine
- Beschwerde an das LG München 1 vom 1-06-2018
- Verfügung des LG München 1 vom 6 06 2018
- Eingabe an das LG München I vom 18-06-2018
- Mitteilung des OLG München and die vom 10-07-2018
- Eingabe an das OLG München vom 1-08-2018

## Beschreibung

### TECHNISCHES GEBIET

Die vorliegende Erfindung bezieht sich auf das Gebiet der Kaffeemaschinen. Sie betrifft eine Kaffeemaschine gemäss dem Oberbegriff des Anspruchs 1. Sie betrifft weiterhin ein Verfahren zum Betrieb einer solchen Kaffeemaschine.

### STAND DER TECHNIK

Es finden sich im Wesentlichen zweierlei Arten von Kaffeemaschinen im Markt:
1. Sogenannte "Halbautomaten" oder "Siebträgermaschinen", bei denen das Kaffeemehl aus einer neben der Kaffeemaschine stehenden Mühle in einen Siebträger (Brühpfanne mit Brühsieb und Auslauföffnung) dosiert wird, welcher dann an der Kaffeemaschine eingespannt wird (siehe z.B. die Druckschrift EP 2 314 188 A1). Der Brühraum wird dabei durch ein in der Kaffeemaschine fest eingebautes Verteilersieb nach oben druckdicht abgeschlossen. Die Kaffeemaschine dosiert anschließend heißes Wasser unter Druck durch diesen Siebträger, der dann den gebrühten Kaffee direkt in die Tasse abgibt. Die Kaffeequalität wird im Wesentlichen durch den Bediener gesteuert, nämlich durch die Einstellung des Mahlgrads an der beigestellten Mühle und durch die beim sog. "Tampern" (das Verdichten des Mahlguts im Siebträger) aufgewendete Kraft. Bei optimalen Bedingungen ist das Brühergebnis - Aroma und Crema - von unschlagbarer Qualität. Viele Verbraucher verbinden optimale Kaffeequalität mit dieser Bauart einer Kaffeemaschine. Allerdings bedarf diese Bauart geschulter Mitarbeiter, die die Einstellung des Mahlgrads und das Tampern beherrschen - ansonsten sind stark schwankende Kaffeequalitäten zu erwarten. Die Siebträgermaschinen sind recht kostengünstig herstellbar, da sie von geringerer technischer Komplexität sind.
2. "Vollautomaten" sind in der Regel mit Kolbenbrühern und Einbaumühlen ausgestattet (siehe z.B. die EP 1955 624 A1 oder die EP 0 605 750 A1 oder die WO 03/043470). Die Einbaumühle dosiert das Kaffeemehl in eine Kolben-Zylinder-Anordnung, welche i.d.R. aus einem Zylinder, einem oberen und einem unteren Kolben besteht (die Kolben weisen jeweils Siebflächen auf, welche als (unteres) Brüh- bzw. (oberes) Verteilersieb dienen). Anschließend wird der Zylinder durch die Kolben verschlossen und heißes Wasser strömt über die Siebe durch den Kaffee, durch einen Auslaufschlauch über einen Auslauf in die Tasse. Die Kaffeequalität derartiger Maschinen ist selbst unter optimaler Auslegung und unter optimalen Einstellbedingungen nicht so gut wie bei einem Halbautomaten. Dies liegt in der Hauptsache daran, dass die automatische Kolben-Zylinderanordnung bzgl. der sehr feinen Mahlgradeinstellungen empfindlich ist, da der Anpressdruck des Kolbens auf Grund der Reibungsverhältnisse nicht so fein kontrolliert werden kann, wie dies manuell beim Halbautomaten möglich ist. Außerdem folgt nach der Brühvorrichtung i.d.R. ein Leitungs- und Auslaufsystem, welches die erzeugte Crema teilweise wieder zerstört und den Kaffee abkühlt. Allerdings ist die erreichte Kaffeequalität durch die vollautomatische Herstellung und die Kontrolle der Prozessparameter sehr stabil und unterscheidet sich kaum von Tasse zu Tasse, eine Abhängigkeit der Qualität vom Bediener ist nicht gegeben. Geräte dieser Art sind im Vergleich zu Halbautomaten deutlich teurer, da die Brühvorrichtung ein relativ komplexes Gebilde ist.

Es gibt aber auch Kaffeemaschinen am Markt, die mit Siebträgern ausgerüstet sind und eine Einbaumühle aufweisen (siehe z.B. die Druckschrift WO 2010/085850 A1). Der Siebträger wird dort zum Befüllen unter einen separaten Mühlenauslass gehalten und dann wie beim Halbautomaten beschrieben in die Brühposition eingesetzt.

Aus der CN 201578093 U ist eine gattungsgemäße Kaffeemaschine bekannt.

### DARSTELLUNG DER ERFINDUNG

Es ist daher eine Aufgabe der Erfindung, eine Kaffeemaschine zu schaffen, welche die Vorteile beider Bauarten vereint, nämlich die Einfachheit und die hohe mögliche Kaffeequalität des Halbautomaten und die Stabilität des Ergebnisses eines Vollautomaten. Nach Möglichkeit sollte auch der Arbeitsaufwand für den Bediener gegenüber dem des Halbautomaten reduziert werden.

Es ist weiterhin eine Aufgabe der Erfindung, ein Verfahren zum Betrieb einer solchen Kaffeemaschine anzugeben.

Diese und andere Aufgaben werden durch die Merkmale der Ansprüche 1 und 9 gelöst.

Die erfindungsgemässe Kaffeemaschine umfasst wenigstens einen abnehmbaren und für den Brühvorgang in eine dafür vorgesehene Halterung an der Kaffeemaschine einsetzbaren Siebträger, erste Mittel zur Erzeugung und Abgabe von heissem Wasser unter Druck, sowie wenigstens eine Kaffeemühle. Sie zeichnet sich dadurch aus, dass zweite Mittel zum wiederholten druckdichten Verschliessen und Öffnen des in die Halterung eingesetzten Siebträgers sowie ggf. zum Tampern von im Siebträger befindlichem Kaffeemehl vorgesehen sind, und dass dritte Mittel zur Einführung von Kaffeemehl aus der Kaffeemühle in den in die Halterung eingesetzten geöffneten Siebträger vorgesehen sind.

Die Kaffeemaschine ist also wie der Halbautomat mit einem entnehmbaren Siebträger ausgestattet. Gleichzeitig ist das Gerät aber auch mit einer Einbaumühle ausgestattet, welche den eingebauten Siebträger - ähnlich wie beim Vollautomaten - innerhalb der Maschine von oben mit Kaffeemehl beschickt. Anschließend wird der Siebträger innerhalb der Maschine (z.B. mit einem Deckel oder mit einem Kolben) verschlossen, das im Siebträger befindliche Kaffeemehl zusammengepresst (getampert) und es wird gebrüht wie beim Halbautomaten. Das Entleeren des Siebträgers erfolgt dann wieder manuell. Hierdurch kann auf eine aufwändige Mechanik zum automatischen Ausstossen und Sammeln des verbrauchten Kaffeemehls (Kaffeesatz) verzichtet werden, ohne dass der Bedienaufwand massgeblich erhöht wird. Vielmehr entfällt das periodische Entleeren und Reinigen eines Auffangbehälters für den Kaffeesatz. Die zweiten Mittel weisen ein Verteilersieb-Element auf, das zwischen einer ersten Position, in welcher der Siebträger offen ist und mit Kaffeemehl gefüllt werden kann, und einer zweiten Position, in welcher das Verteilersieb-Element den Siebträger druckdicht verschliesst, hin und her bewegbar. Zur Bewegung des Verteilersieb-Elements zwischen der ersten und zweiten Position ist dabei erfindungsgemäß eine elektrisch oder hydraulisch arbeitende Antriebseinheit vorgesehen.

Eine Ausgestaltung der Kaffeemaschine nach der Erfindung ist dadurch gekennzeichnet, dass die zweiten Mittel konstruktiv zur Einführung des unter Druck stehenden heissen Wassers in den in die Halterung eingesetzten Siebträger ausgebildet sind. Hierdurch lässt sich ein besonders kompakter Aufbau der Brühvorrichtung erreichen.

Eine andere Ausgestaltung der Kaffeemaschine nach der Erfindung ist dadurch gekennzeichnet, dass die zweiten Mittel zum Tampern von im Siebträger befindlichem Kaffeemehl vorgesehen sind.

Erfindungsgemäss umfassen die zweiten Mittel ein Verteilersieb-Element, welches mit einem Verteilersieb im Siebträger einen Brühraum begrenzt und durch das Verteilersieb das unter Druck stehende heisse Wasser in den Brühraum einführt.

In diesem Zusammenhang ist es denkbar, dass das Verteilersieb-Element den Siebträger nach Art eines Deckels verschliesst, und dass zwischen Verteilersieb-Element und Siebträger eine axial wirkende Dichtung vorgesehen ist.

Es ist aber auch denkbar, dass der Siebträger einen zylindrischen Brühraum aufweist, dass das Verteilersieb-Element den Siebträger nach Art eines Kolbens eintauchend verschliesst, und dass zwischen Verteilersieb-Element und Siebträger eine radial wirkende Dichtung vorgesehen ist. Die Dichtung kann dabei nach dem Eintauchen des Verteilersieb-Elements bzw. Kolbens aufgeblasen werden, um die Dichtwirkung zu erreichen bzw. zu erhöhen. Die Dichtung kann aber auch durch axiales Zusammendrücken dichtend nach in radiale Richtung gequetscht werden. Auch ist es denkbar, die Dichtung durch eine in axialer Richtung verschiebbare Konusfläche (Konusabschnitt) in radialer Richtung auszulenken.

Eine weitere Ausgestaltung der erfindungsgemässen Kaffeemaschine ist dadurch gekennzeichnet, dass die ersten Mittel einen mit einer Heizvorrichtung ausgerüsteten Boiler umfassen, der mit den zweiten Mitteln hydraulisch verbunden ist.

Insbesondere kann der Boiler zum Erzeugen des Brühdruckes über eine Pumpe mit einem Kaltwasseranschluss verbunden sein. Mittels der Pumpe wird dann durch Einspeisen von Kaltwasser das heisse Wasser aus dem Boiler mit dem notwendigen Druck durch das Kaffeemehl im Siebträger gepresst.

Eine weitere Ausgestaltung der erfindungsgemässen Kaffeemaschine ist dadurch gekennzeichnet, dass eine zentrale Steuerung vorgesehen ist, welche die Kaffeemühle, die ersten Mittel und ggf. die zweiten Mittel steuert. Mit der Steuerung kann der Ablauf der Getränke-Zubereitung automatisch gesteuert werden, um nach Massgabe der vorgegebenen oder vorgebbaren Parameter ein gleichbleibendes Ergebnis zu erzielen.

Das erfindungsgemässe Verfahren zum Betrieb der erfindungsgemässen Kaffeemaschine umfasst die folgenden Schritte:
- Einsetzen eines leeren Siebträgers in die dafür vorgesehene Halterung der Kaffeemaschine;
- Mahlen einer Portion Kaffeebohnen und Einfüllen des entstehenden Kaffeemehls in den Siebträger;
- druckdichtes Verschliessen des Siebträgers mit den zweiten Mitteln;
- Durchdrücken von heissem Wasser durch das im Siebträger eingeschlossene Kaffeemehl;
- Entnehmen und Ausleeren des Siebträgers.

Eine Ausgestaltung des erfindungsgemässen Verfahrens ist dadurch gekennzeichnet, dass vor oder mit dem druckdichten Verschliessen des Siebträgers das im Siebträger befindliche Kaffeemehl getampert wird.

Eine andere Ausgestaltung des Verfahrens nach der Erfindung ist dadurch gekennzeichnet, dass das Durchdrücken des heissen Wassers mittels eines in den zweiten Mitteln angeordneten Kolbens erfolgt.

Alternativ dazu kann das Durchdrücken des heissen Wassers mittels einer Pumpe erfolgen.

Eine andere Ausgestaltung des Verfahrens ist dadurch gekennzeichnet, dass die zwischen dem Einsetzen eines leeren Siebträgers und dem Entnehmen und Ausleeren des Siebträgers liegenden Schritte mittels einer Steuerung automatisch durchgeführt werden.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine stark vereinfachtes Schema einer Kaffeemaschine gemäss einem Ausführungsbeispiel der Erfindung mit eingesetztem Siebträger vordem Verschliessen des Siebträgers;
- Fig. 2: die Kaffeemaschine aus Fig. 1 nach dem Verschliessen des Siebträgers;
- Fig. 3: in einer vergrösserten Detailansicht den Siebträger aus Fig. 1, der durch ein Verteilersieb-Element nach Art eines Deckels mit axial wirkender Dichtung verschlossen wird;
- Fig. 4: in einer vergrösserten Detailansicht den Siebträger aus Fig. 1, der durch ein Verteilersieb-Element nach Art eines Kolbens mit radial wirkender Dichtung verschlossen wird;
- Fig. 4a: in einem vergrösserten Ausschnitt eine radial wirkende Dichtung für das Verteilersieb-Element aus Fig. 4, die nach dem Einfahren des Kolbens in den Siebträger aufgeblasen wird;
- Fig. 5: in einer vergrösserten Detailansicht den Siebträger aus Fig. 1, der durch ein Verteilersieb-Element verschlossen wird, wobei die Dichtung durch axiale Kräfte in radialer Richtung gedehnt wird;
- Fig. 6: in einer zu Fig. 5 vergleichbaren Darstellung das Verschliessen durch ein Verteilersieb-Element, wobei die Dichtung durch eine innen liegende konische Fläche (Konusabschnitt) in radialer Richtung nach aussen gedrückt wird;
- Fig. 7: in einer vergrösserten Detailansicht den Siebträger aus Fig. 1, der mittels eines nicht unter die Erfindung fallenden handbetätigten Hebelmechanismus verschlossen und mittels eines handbetätigten Kolbens mit unter Druck stehendem heissen Wasser beaufschlagt wird; und
- Fig. 8: einen beispielhaften Ablaufplan für den Betrieb einer Kaffeemaschine nach der Erfindung.

### WEGE ZUR AUSFÜHRUNG DER ERFINDUNG

Gegenstand der vorliegenden Erfindung ist eine Kaffeemaschine, welche wie der Halbautomat mit einem entnehmbaren Siebträger ausgestattet ist. Gleichzeitig ist das Gerät jedoch mit einer Einbaumühle ausgestattet, welche den eingebauten Siebträger - ähnlich wie bei einem Vollautomaten - innerhalb der Maschine von oben mit Kaffeemehl beschickt. Anschließend wird der Siebträger innerhalb der Maschine mit einem Deckel oder mit einem Kolben verschlossen und es wird gebrüht wie beim Halbautomaten. Das Entleeren des Siebträgers erfolgt manuell. Die Kaffeemaschine nimmt ihrer Funktion nach daher eine Mittelstellung zwischen einem Halbautomaten und einem Vollautomaten ein und begründet eine neue Klasse von Kaffeemaschinen, die als 3/4-Automaten bezeichnet werden können.

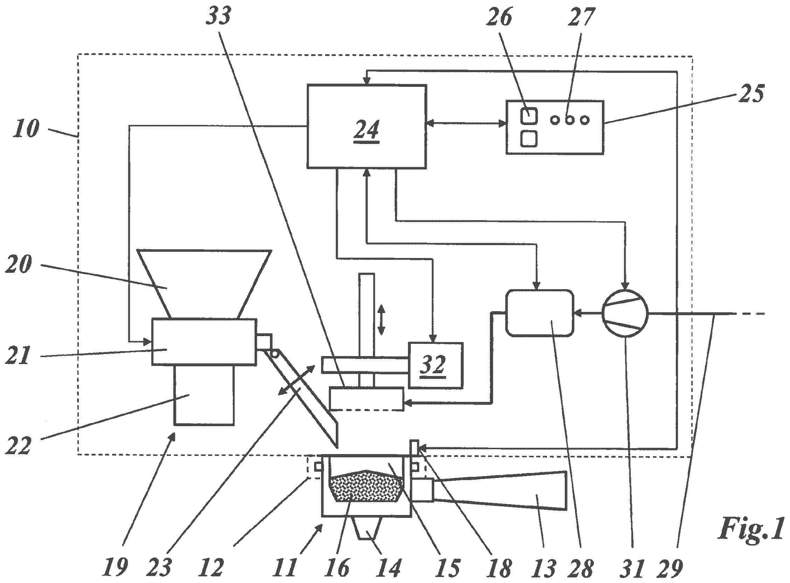

In Fig. 1 ist ein stark vereinfachtes Schema einer Kaffeemaschine gemäss einem Ausführungsbeispiel der Erfindung mit eingesetztem Siebträger vor dem Verschliessen des Siebträgers wiedergegeben. Die Kaffeemaschine 10, deren Umrisse durch ein gestricheltes Rechteck nur angedeutet sind, weist im unteren Bereich eine (ebenfalls nur gestrichelt angedeutete) Halterung 12 auf, in die ein Siebträger 11 entnehmbar eingesetzt werden kann.

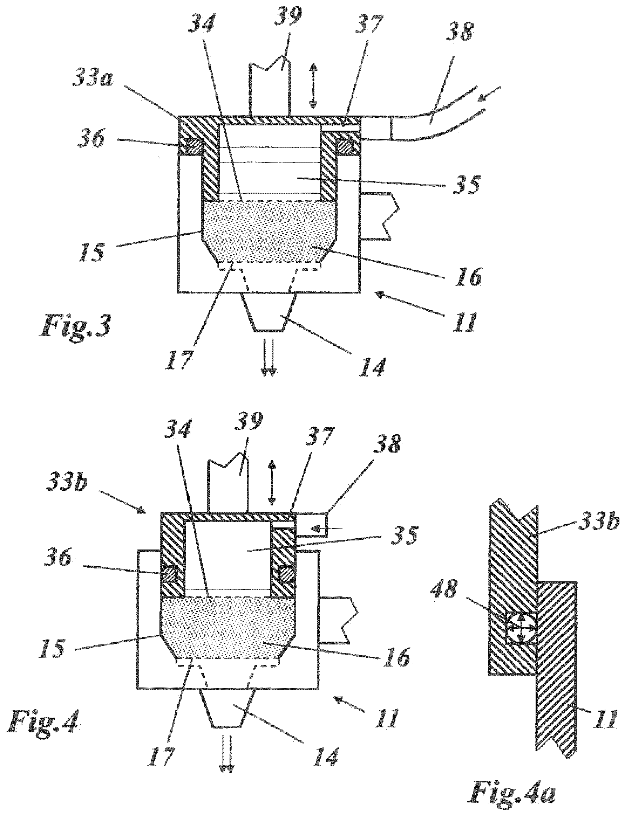

Der in Fig. 1 in die Halterung 12 eingesetzte Siebträger 11 hat einen nach oben offenen, im Wesentlichen zylindrischen Brühraum 15, der - wie dies in Fig. 3-6 gezeigt ist - in an sich bekannter Weise nach unten hin durch ein Brühsieb 17 begrenzt ist, an das sich nach unten zu ein Auslauf mit einer Auslauföffnung 14 anschliesst. Der Siebträger 11 hat auf der Aussenseite Vorrichtungen, die mit der Halterung 12 zusammenwirken und es ermöglichen, dass der Siebträger 11 in die Halterung 12, z.B. nach Art eines Bajonett-Verschlusses, eingesetzt und dort gehalten werden kann. Der Siebträger 11 ist zur leichteren Handhabung in an sich bekannter Weise mit einem seitlich abstehenden Handgriff 13 ausgerüstet.

An der Halterung 12 kann zusätzlich eine Siebträger-Verriegelung 18 angebracht sein, die im aktivierten Zustand verhindert, dass der Siebträger 11 aus der Halterung 12 entnommen werden kann, und die deaktiviert (gelöst) wird, wenn der Brühvorgang beendet ist und der Siebträger 11 im Inneren der Maschine wieder geöffnet ist. Es ist aber auch denkbar, anstelle der oder zusätzlich zur Siebträger-Verriegelung 18 eine optische Anzeige vorzusehen, die anzeigt, wann der Siebträger 11 wieder geöffnet und damit entnahmebereit ist.

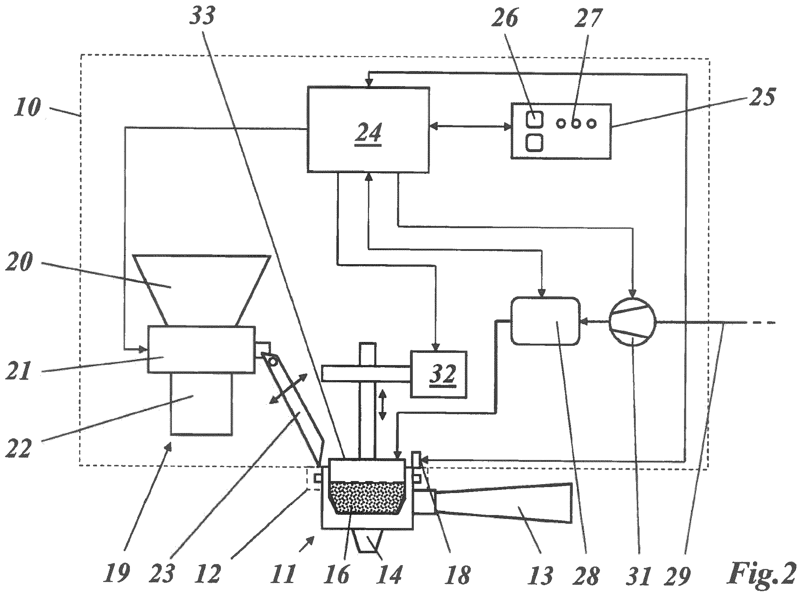

Im Inneren der Kaffeemaschine 10 ist eine Kaffeemühle 19 integriert, die beispielsweise einen (trichterförmigen) Bohnenbehälter 20 für die Kaffeebohnen aufweist, der direkt über einem Mahlwerk 21 angeordnet ist, welches von einem Antriebsmotor 22 angetrieben wird. Aus dem Mahlwerk 21 tritt seitlich (in Fig. 1 rechts) das gemahlene Kaffeemehl 16 aus und wird im dargestellten Beispiel besonders einfach (durch Schwerkraft) über eine Schütte 23 in den in die Halterung 12 eingesetzten, noch offenen Siebträger 11 befördert. Die Schütte 23 kann verschwenkbar ausgebildet sein, um in einer Position das Kaffeemehl 16 sicher in den Siebträger 11 zu befördern, und in einer anderen, zurückgeschwenkten Position (siehe Fig. 2) das ungehinderte Verschliessen des Siebträgers 11 zu ermöglichen. Andere Mechanismen für die Beförderung des Kaffeemehls 16 sind aber auch denkbar.

Direkt über dem in die Halterung 12 eingesetzten Siebträger 11 ist im Beispiel der Fig. 1 ein Verteilersieb-Element 33 nach Art eines Kolbens angeordnet, das mittels einer Antriebseinheit 32 in vertikaler Richtung zwischen der in Fig. 1 dargestellten zurückgezogenen Position und der in Fig. 2 dargestellten Verschlussposition verfahren werden kann. Das Verteilersieb-Element 33 verschliesst in der Verschlussposition den Brühraum 15 im eingesetzten Siebträger 11, verdichtet ("tampert") das im Siebträger 11 zunächst in lockerer Form vorliegende Kaffeemehl 16 und ermöglicht die Zufuhr von unter Druck stehendem Wasser über ein auf der Unterseite des Verteilersieb-Elements 33 angeordnetes Verteilersieb (34 in Fig.3-6). Dazu befindet sich oberhalb des Verteilersiebes 34 im Verteilersieb-Element 33 ein Verteilerraum 35, in den über eine Zulaufbohrung 37 von einem Heisswasseranschluss 38 heisses Wasser aus einem in der Maschine eingebauten Boiler 28 eingeführt werden kann.

Im Beispiel der Fig. 1 und 2 ist der Boiler (Heisswasserbereiter) 28 mit dem Verteilersieb-Element 33 hydraulisch verbunden und über eine Pumpe 31 an einen Kaltwasseranschluss 29 angeschlossen. Das im Boiler 28 befindliche Wasser wird mittels einer (in der Figur nicht dargestellten) eingebauten Heizvorrichtung (z.B. einer Widerstandsheizung) aufgeheizt und dann während des Brühvorgangs unter Druck (Brühdruck) in das Verteilersieb-Element 33 befördert, wo es durch das Verteilersieb 34 über die Fläche gleichmässig verteilt in den Brühraum 15 eintritt, das dort befindliche Kaffeemehl 16 durchströmt und durch das Brühsieb 17 nach unten wieder austritt und über die Auslauföffnung 14 nach aussen abgegeben wird. Der notwendige Brühdruck wird durch Zupumpen von Kaltwasser mittels der Pumpe 31 erzeugt. Der Heisswasserausgang des Boilers 28 ist dabei vorzugsweise über einen flexiblen Schlauch mit dem Verteilersieb-Element 33 verbunden, um dessen notwendige Bewegungsfreiheit in vertikaler Richtung zu ermöglichen. Es ist in diesem Zusammenhang selbstverständlich auch denkbar, anstelle des Boilers 28 einen Durchlauferhitzer einzusetzen, der das Wasser direkt auf dem Weg zum Verteilersieb-Element 33 erhitzt.

Damit der gesamte Brühvorgang einschliesslich der Zubereitung des Kaffeemehls nach dem Einsetzen des Siebträgers 11 automatisch und unter gleich bleibenden Bedingungen ablaufen kann, ist in der Kaffeemaschine 10 eine zentrale Steuerung 24 vorgesehen, die mit einer Anzeige/Bedieneinheit 25 verbunden ist. Die Anzeige/Bedieneinheit 25 weist Tasten 26 auf, die beispielsweise zum Starten und Stoppen des Brühvorgangs und/oder zur Eingabe von Parametern (Wassermenge, Tassengrösse, Getränkeart etc.) und/oder zur Steuerung optischer Anzeigen vorgesehen sein können. Des Weiteren können optische Anzeigen 27 in Form von Signallampen und/oder alphanumerischen Anzeigen vorhanden sein, die über den Status der Maschine Auskunft geben, der Bedienerführung dienen und/oder in einem Speicher der Steuerung 24 abgespeicherte Betriebswerte (ausgegebene Tassenzahl etc.) anzeigen. Selbstverständlich können auch individuelle Brühprogramme über die Anzeige/Bedieneinheit 25 eingegeben, im Speicher der Steuerung 24 abgelegt und bei Bedarf abgerufen werden.

Die Steuerung 24 steuert (und überwacht) insbesondere die Heizvorrichtung im Boiler 28, die Pumpe 31, die elektromotorisch oder hydraulisch arbeitende Antriebseinheit 32 des Verteilersieb-Elements 33 und die Kaffeemühle 19. Ist eine Siebträger-Verriegelung 18 vorhanden, ist diese ebenfalls mit der Steuerung 24 verbunden. Für das Verschwenken der Schütte 23 ist ein gesteuerter Antrieb nicht notwendig, wenn die Schütte 23 über einen Mechanismus mit dem Verteilersieb-Element 33 bzw. der Antriebseinheit 32 mechanisch so gekoppelt ist, dass beim Herunterfahren des Verteilersieb-Elements 33 in den Siebträger 11 die Schütte 23 gleichzeitig nach aussen wegschwenkt.

Fig. 2 zeigt die Anordnung nach Fig. 1 nach dem Eintauchen des Verteilersieb-Elements 33 in den Siebträger 11 und dem gleichzeitigen Herausschwenken der Schütte 23. Das kompaktierte (getamperte) Kaffeemehl 16 befindet sich direkt zwischen dem Verteilersieb 34 des Verteilersieb-Elements 33 und dem Brühsieb 17 des Siebträgers 11. In diesem Zustand kann das unter Druck stehende heisse Wasser über das Verteilersieb 34 durch das Kaffeemehl 16 gepresst und über das Brühsieb 17 nach unten an der Auslauföffnung 14 des Siebträgers 11 als Kaffeegetränk entnommen werden.

Damit dieser Brühvorgang erfolgreich ablaufen kann, muss der zwischen den Sieben 17 und 34 liegende Brühraum 15 mit dem darin befindlichen Kaffeemehl 16 nach aussen hin druckdicht verschlossen sein. Hierfür stehen verschiedene Möglichkeiten zur Verfügung, die im Zusammenhang mit den Fig. 3-6 nachfolgend erläutert werden sollen.

Fig. 3 zeigt in einer vergrösserten Detailansicht den Siebträger 11 aus Fig. 1. Zum Verschliessen des mit Kaffeemehl 16 gefüllten Siebträgers 11 wird ein Verteilersieb-Element 33a nach Art eines Deckels eingesetzt, das mit einer axial wirkenden Dichtung 36 ausgestattet ist und von oben kommend auf einer oberen ringförmigen Stirnfläche des Siebträgers 11 nach Art einer Flanschdichtung dichtend aufsetzt. Das Verteilersieb-Element 33a kann von seiner Gestalt her so ausgelegt sein, dass es beim dichtenden Aufsetzen gleichzeitig mit seinem Verteilersieb 34 in den Siebträger 11 beziehungsweise Brühraum 15 eintaucht und dass im Brühraum 15 befindliche Kaffeemehl 16 in einem gewissen Masse komprimiert. Das Mass der Kompression hängt dabei von der Menge des eingefüllten Kaffeemehls 16 ab. Bei gleich bleibender Menge des Kaffeemehls 16 kann die Kompression nicht verändert werden, weil die End-Position des Verteilersiebs 34 vorgegeben ist.

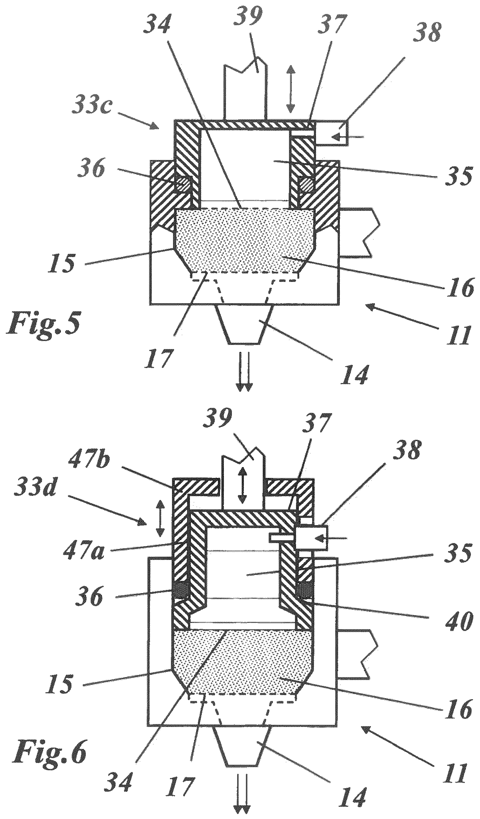

Eine gewisse Flexibilität beim Tampern kann durch Dichtungskonfigurationen erreicht werden, wie sie in Fig. 5 und Fig. 6 dargestellt sind. Beim Verteilersieb-Element 33c in Fig. 5 wird die Dichtung 36 in axialer Richtung zusammengedrückt (gequetscht) und damit in radialer Richtung dichtend an die seitlichen Wände gepresst. Durch das Nachgeben der elastischen Dichtung kann das Verteilersieb 34 unterschiedliche End-Positionen einnehmen und somit unterschiedlich stark auf das Kaffeemehl 16 einwirken.

Bei der Dichtungskonfiguration gemäss Fig. 6 hat das Verteilersieb-Element 33d einen zweiteiligen Aufbau mit einem einen Verteilerraum 35 umschliessenden Innenteil 47a mit Verteilersieb 34 und einem relativ zum Innenteil 47a in Schliessrichtung beweglichen Aussenteil 47b. Das Innenteil 47a verjüngt sich nach oben unter Ausbildung eines Konusabschnitts 40, auf dem auf der Aussenseite eine Dichtung 36 aufliegt. Das Aussenteil 47b ist glockenartig über den verjüngten Abschnitt des Innenteils 47a gestülpt und drückt mit seinem unteren Rand auf die Dichtung 36, wenn es relativ zum Innenteil 47a nach unten bewegt wird. Dei Dichtung 36 wird so beim Schliessen dichtend gespreizt.

Eine wesentlich grössere Flexibilität beim Tampern lässt sich durch eine Konfiguration des Verteilersieb-Elements erreichen, wie sie in Fig. 4 dargestellt ist. Das dortige Verteilersieb-Element 33b taucht beim Verschliessen des Siebträgers 11 nach Art eines frei verschiebbaren Kolbens in den Siebträger 11 ein, wobei die Abdichtung durch eine radial wirkende Dichtung 36 erreicht wird. In diesem Fall kann das Kaffeemehl 16 ohne geometrische Begrenzung komprimiert werden, sofern die notwendigen Kräfte an der zugehörigen Kolbenstange 39 aufgebracht werden. Um in diesem Fall ein verschleissfreies Eintauchen des Kolbens bei gleichzeitig grosser Dichtwirkung zu erreichen, kann gemäss Fig. 4a eine Dichtung 48 eingesetzt werden, die erst nach Einnehmen der Endposition des Kolbens aufgeblasen wird und dadurch ihre volle Dichtwirkung erreicht.

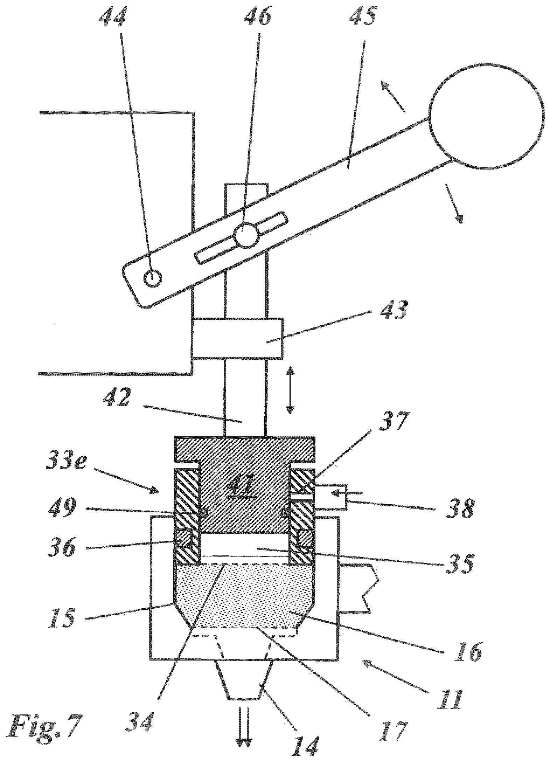

Im Ausführungsbeispiel der Fig. 1 und 2 ist zum Verfahren des Verteilersieb-Elements 33 bzw. 33a-d zwischen den beiden Endpositionen eine elektromotorische oder hydraulisch arbeitende Antriebseinheit 32 vorgesehen. Es ist aber auch denkbar, für das Verfahren des Verteilersieb-Elements eine nicht unter die Erfindung fallende von Hand betriebene Hebelmechanik einzusetzen. Ein Beispiel dafür ist in Fig. 7 wiedergegeben. Das dortige Verteilersieb-Element 33e, in welchem zusätzlich ein zweiter Kolben 41 verschiebbar angeordnet ist, kann - wie beim Beispiel der Fig. 4 - zusammen mit diesen Kolben 41 über eine in einer Führung 43 geführte Kolbenstange 42 dichtend in den Siebträger 11 eingefahren werden. Über einen mittels eines Schwenklagers 44 schwenkbar gelagerten Betätigungshebel 45, der über eine Gelenkverbindung 46 mechanisch mit der Kolbenstange 42 gekoppelt ist, kann die Kolbenstange 42 durch Verschwenken des Betätigungshebels 45 in vertikaler Richtung nach oben und unten bewegt werden, wobei die für das Tampern notwendige Kraft bei der Abwärtsbewegung aufgebracht werden kann.

Der zweite Kolben 41, der im Verteilersieb-Element 33e mittels einer Dichtung 49 dichtend gleiten kann, ermöglicht es, mit dem Betätigungshebel 45 heisses Wasser unter Druck durch das Verteilersieb 34 in den Brühraum zu pressen. Nach dem Einfüllen des Kaffeemehls 16 wird zunächst das Verteilersieb-Element 33e handbetätigt in den Siebträger 11 eingefahren, um das Kaffeemehl 16 zu tampern. Danach kann der zweite Kolben 41 aus dem Verteilersieb-Element 33e so weit herausgezogen werden, dass über die Zulaufbohrung 37 heisses Wasser (drucklos) in den vergrösserten Verteilerraum 35 eingeführt werden kann. Anschliessend kann das eingeführte heisse Wasser durch Einschieben des zweiten Kolbens 41 in das Verteilersieb-Element 33e durch den Brühraum 15 und das darin befindliche Kaffeemehl 16 gepresst werden. Auf diese Weise kann die Mechanik vereinfacht werden und die Bedienperson hat die Möglichkeit, den beim Tampern aufgewendeten Druck nach eigenem Gutdünken zu wählen und zu variieren.

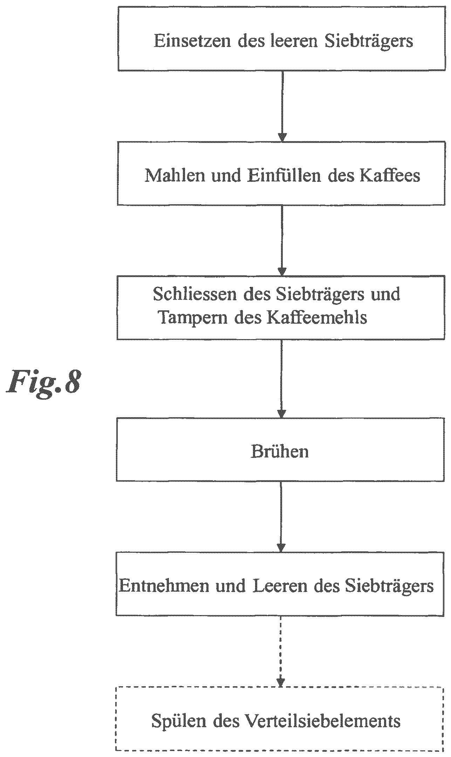

Der gesamte Verfahrensablauf ist in seinen wesentlichen Schritten noch einmal in Fig. 8 dargestellt: das Verfahren beginnt mit dem Einsetzen des leeren Siebträgers 11 in die dafür vorgesehene Halterung 12 an der Kaffeemaschine 10. Nach dem Einsetzen wird die erforderliche vorbestimmte Menge an Kaffee gemahlen und in den eingesetzten Siebträger eingefüllt. Anschliessend wird der Siebträger 11 mit dem darin befindlichen Kaffeemehl 16 druckdicht verschlossen. Dieser Vorgang kann mit dem Tampern des Kaffeemehls einhergehen. Danach wird der eigentliche Brühvorgang durchgeführt, indem heisses Wasser unter Druck durch das Kaffeemehl im Siebträger 11 gepresst wird. Ist der Brühvorgang beendet, kann der Siebträger 11 aus der Halterung 12 entnommen und durch Ausklopfen des Kaffeesatzes gelehrt und gegebenenfalls gereinigt werden. Zusätzlich kann optional ein maschineninterner Spühlvorgang für das Verteilersieb-Element vorgesehen werden, in welchem das Verteilersieb von möglicherweise anhaftenden Kaffeemehlresten befreit wird.

Insgesamt ergibt sich mit der Erfindung eine neuartige Kaffeemaschine (3/4-Automat), welche sich durch folgende Vorteile auszeichnet:
- durch eine Automatisierung beim Mahlen, Einfüllen und Tampern des Kaffees, beim Verschliessen des Siebträgers und beim Brühen wird eine vorgebbare, gleich bleibende Qualität des Getränks erreicht; nur das unkritische Ausleeren des Siebträgers wird von der Bedienperson übernommen;
- durch Einsparung einer Auswerfmechanik für den Kaffeesatz wird der apparative Aufwand für die Kaffeemaschine deutlich verringert;
- durch den abnehmbaren Siebträger vereinfacht sich die Reinigung der Maschine erheblich;
- das umständliche Ausleeren eines in der Maschine befindlichen Auffangbehälters für den Kaffeesatz entfällt.

## Patentansprüche

1. Kaffeemaschine (10), umfassend wenigstens einen abnehmbaren und für den Brühvorgang in eine dafür vorgesehene Halterung (12) an der Kaffeemaschine einsetzbaren Siebträger (11), erste Mittel (28,..,31) zur Erzeugung und Abgabe von heissem Wasser unter Druck, sowie wenigstens eine Kaffeemühle (19), wobei zweite Mittel (33; 33a-e; 41) zum wiederholten druckdichten Verschliessen und Öffnen des in die Halterung (12) eingesetzten Siebträgers (11) vorgesehen sind, wobei die zweiten Mittel (33; 33a-e; 41) ein Verteilersieb-Element (33; 33a-e) umfassen, welches mit einem Verteilersieb (34) im Siebträger (11) einen Brühraum (15) begrenzt und durch das Verteilersieb (34) das unter Druck stehende heisse Wasser in den Brühraum (15) einführt, wobei das Verteilersieb-Element zwischen einer ersten Position, in welcher der Siebträger (11) offen ist und mit Kaffeemehl gefüllt werden kann, und einer zweiten Position, in welcher das Verteilersieb-Element (33; 33a-e) den Siebträger druckdicht verschliesst, hin und her bewegbar ist, und dass dritte Mittel (23) zur Einführung von Kaffeemehl (16) aus der Kaffeemühle (19) in den in die Halterung (12) eingesetzten geöffneten Siebträger (11) vorgesehen sind, **dadurch gekennzeichnet, dass** zur Bewegung des Verteilersieb-Elements (33; 33a-d) zwischen der ersten und zweiten Position eine elektrisch oder hydraulisch arbeitende Antriebseinheit (32) vorgesehen ist.

2. Kaffeemaschine nach Anspruch 1, **dadurch gekennzeichnet, dass** die zweiten Mittel (33; 33a-e; 41) konstruktiv zur Einführung des unter Druck stehenden heissen Wassers in den in die Halterung (12) eingesetzten Siebträger (11) ausgebildet sind.

3. Kaffeemaschine nach Anspruch 1 oder 2, **dadurch gekennzeichnet, dass** die zweiten Mittel (33; 33a-e; 41) zum Tampern von im Siebträger (11) befindlichem Kaffeemehl (16) vorgesehen sind.

4. Kaffeemaschine nach Anspruch 1, **dadurch gekennzeichnet, dass** das Verteilersieb-Element (33a) den Siebträger (11) nach Art eines Deckels verschliesst, und dass zwischen Verteilersieb-Element (33a) und Siebträger (11) eine axial wirkende Dichtung (36) vorgesehen ist.

5. Kaffeemaschine nach Anspruch 1, **dadurch gekennzeichnet, dass** der Siebträger (11) einen zylindrischen Brühraum (15) aufweist, dass das Verteilersieb- Element (33; 33b-e) den Siebträger (11) nach Art eines Kolbens eintauchend verschliesst, und dass zwischen Verteilersieb-Element (33a) und Siebträger (11) eine radial wirkende Dichtung (36) vorgesehen ist.

6. Kaffeemaschine nach einem der Ansprüche 1 bis 5, **dadurch gekennzeichnet, dass** die ersten Mittel einen mit einer Heizvorrichtung ausgerüsteten Boiler (28) umfassen, der mit den zweiten Mitteln (33; 33a-e; 41) hydraulisch verbunden ist.

7. Kaffeemaschine nach Anspruch 6, **dadurch gekennzeichnet, dass** der Boiler (28) zum Erzeugen des Brühdruckes über eine Pumpe (31) mit einem Kaltwasseranschluss (29) verbunden ist.

8. Kaffeemaschine nach einem der Ansprüche 1 bis 7, **dadurch gekennzeichnet, dass** eine zentrale Steuerung (24) vorgesehen ist, welche die Kaffeemühle (19), die ersten Mittel (28,..,31) und ggf. die zweiten Mittel (33; 33a-d) steuert.

9. Verfahren zum Betrieb der Kaffeemaschine nach einem der Ansprüche 1 bis 8, welches Verfahren die folgenden Schritte umfasst:
a. Einsetzen eines leeren Siebträgers (11) in die dafür vorgesehene Halterung (12) der Kaffeemaschine (10);
b. Mahlen einer Portion Kaffeebohnen und Einfüllen des entstehenden Kaffeemehls (16) in den Siebträger (11);
c. druckdichtes Verschliessen des Siebträgers (11) mit den zweiten Mitteln (33; 33a-e; 41);
d. Durchdrücken von heissem Wasser durch das im Siebträger (11) eingeschlossene Kaffeemehl (16);
e. Entnehmen und Ausleeren des Siebträgers (11).

10. Verfahren nach Anspruch 9, **dadurch gekennzeichnet, dass** vor oder mit dem druckdichten Verschliessen des Siebträgers (11) das im Siebträger (11) befindliche Kaffeemehl (16) getampert wird.

11. Verfahren nach Anspruch 9 oder 10, **dadurch gekennzeichnet, dass** das Durchdrücken des heissen Wassers mittels eines in den zweiten Mitteln (33; 33a-e; 41) angeordneten Kolbens (41) erfolgt.

12. Verfahren nach Anspruch 9 oder 10, **dadurch gekennzeichnet, dass** das Durchdrücken des heissen Wassers mittels einer Pumpe (31) erfolgt.

13. Verfahren nach einem der Ansprüche 9 bis 12, **dadurch gekennzeichnet, dass** die zwischen dem Einsetzen eines leeren Siebträgers (11) und dem Entnehmen und Ausleeren des Siebträgers (11) liegenden Schritte mittels einer Steuerung (24) automatisch durchgeführt werden.

## Claims

1. Coffee machine (10), comprising at least one removable portafilter (11) that is insertable for the brewing process into a holder (12) provided therefor on the coffee machine, first means (28,..,31) for producing and dispensing hot water under pressure, as well as at least one coffee grinder (19), wherein second means (33; 33a-e; 41) are provided for the repeated pressure-tight closing and opening of the portafilter (11) inserted into the holder (12), wherein the second means (33; 33a-e; 41) comprise a distributor sieve element (33; 33a-e), which with a distributor sieve (34) defines a brewing chamber (15) in the portafilter (11) and introduces the pressurised hot water into the brewing chamber (15) through the distributor sieve (34), wherein the distributor sieve element can be moved back and forth between a first position, in which the portafilter (11) is open and can be filled with ground coffee, and a second position, in which the distributor sieve element (33; 33a-e) closes the portafilter in a pressure-tight manner, and that third means (23) are provided for bringing in ground coffee (16) from the coffee grinder (19) into the opened portafilter (11) inserted in the holder (12), **characterised in that** for moving the distributor sieve element (33; 33a-d) between the first and the second position an electrically or hydraulically operating actuator unit (32) is provided.

2. Coffee machine according to claim 1, **characterised in that** the second means (33; 33a-e; 41) are designed for introducing the pressurised hot water into the portafilter (11) inserted into the holder (12).

3. Coffee machine according to claim 1 or 2, **characterised in that** the second means (33; 33a-e; 41) are provided for tamping the ground coffee (16) present in the portafilter (11).

4. Coffee machine according to claim 1, **characterised in that** the distributor sieve element (33a) closes the portafilter (11) in the form of a lid, and **in that** an axially acting seal (36) is provided between the distributor sieve element (33a) and the portafilter (11).

5. Coffee machine according to claim 1, **characterised in that** the portafilter (11) has a cylindrical brewing chamber (15), **in that** the distributor sieve element (33; 33b-e) closes the portafilter (11) in an immersing manner like a piston; and **in that** a radially acting seal (36) is provided between the distributor sieve element (33a) and the portafilter (11).

6. Coffee machine according to one of claims 1 to 5, **characterised in that** the first means comprise a boiler (28) that is fitted with a heating device and that is hydraulically connected to the second means (33; 33a-e; 41).

7. Coffee machine according to claim 6, **characterised in that** for generating the brewing pressure, the boiler (28) is connected via a pump (31) to a cold-water connection (29).

8. Coffee machine according to one of claims 1 to 7, **characterised in that** a central control unit (24) is provided, which controls the coffee grinder (19), the first means (28,...,31) and, if applicable, the second means (33; 33a-d).

9. Method for operating the coffee machine according to one of claims 1 to 8, said method comprising the following steps:
a. insertion of an empty portafilter (11) into the holder (12) of the coffee machine (10) provided therefor;
b. grinding of a portion of coffee beans and filling the resulting ground coffee (16) into the portafilter (11);
c. pressure-tight closing of the portafilter (11) with the second means (33; 33a-e; 41);
d. pressing of hot water through the ground coffee (16) enclosed in the portafilter (11);
e. removal and emptying of the portafilter (11).

10. Method according to claim 9, **characterised in that** before or during the pressure-tight closing of the portafilter (11), the ground coffee (16) present in the portafilter (11) is tamped.

11. Method according to claim 9 or 10, **characterised in that** the pressing through of the hot water takes place by means of a piston (41) arranged in the second means (33; 33a-e; 41).

12. Method according to claim 9 or 10, **characterised in that** the pressing through of the hot water takes place by means of a pump (31).

13. Method according to one of claims 9 to 12, **characterised in that** the steps between the insertion of an empty portafilter (11) and the removal and emptying of the portafilter (11) are carried out automatically by means of a control unit (24).

## Revendications

1. Machine à café (10), comprenant au moins un porte-filtre (11) amovible qui peut être placé pendant le processus d'infusion dans un support (12) prévu à cet effet sur la machine à café, des premiers moyens (28, ..., 31) pour la production et la fourniture d'eau chaude sous pression, ainsi qu'au moins un moulin à café (19), dans lequel des deuxièmes moyens (33; 33a-e; 41) sont prévus pour la fermeture étanche à la pression et l'ouverture répétées du porte-filtre (11) placé dans le support (12), dans lequel les deuxièmes moyens (33; 33a-e; 41) comportent un élément de tamis de distribution (33; 33a-e) qui délimite avec un tamis de distribution (34) un espace d'infusion (15) dans le porte-filtre (11) et introduit via le tamis de distribution (34) l'eau chaude sous pression dans l'espace d'infusion (15), l'élément de tamis de distribution étant déplaçable entre une première position, dans laquelle le porte-filtre (11) est ouvert et peut être rempli de café moulu, et une deuxième position, dans laquelle l'élément de tamis de distribution (33; 33a-e) ferme le porte-filtre de manière étanche à la pression, et que des troisièmes moyens (23) sont prévus pour l'introduction de café moulu (16) provenant du moulin à café (19) dans le porte-filtre (11) ouvert placé dans le support (12), **caractérisée en ce que**, pour déplacer l'élément de tamis de distribution (33; 33a-e) entre la première et la deuxième position, il est prévu une unité d'entraînement (32) travaillant de façon électrique ou hydraulique.

2. Machine à café selon la revendication 1, **caractérisée en ce que** les deuxièmes moyens (33; 33a-e; 41) sont construits pour l'introduction de l'eau chaude sous pression dans le porte-filtre (11) placé dans le support (12).

3. Machine à café selon la revendication 1 ou 2, **caractérisée en ce que** les deuxièmes moyens (33; 33a-e; 41) sont prévus pour tasser du café moulu (16) qui se trouve dans le porte-filtre (11).

4. Machine à café selon la revendication 1, **caractérisée en ce que** l'élément de tamis de distribution (33a) ferme le porte-filtre (11) à la manière d'un couvercle et **en ce qu'**un joint d'étanchéité (36) qui agit de façon axiale est prévu entre l'élément de tamis de distribution (33a) et le porte-filtre (11).

5. Machine à café selon la revendication 1, **caractérisée en ce que** le porte-filtre (11) comporte un espace d'infusion (15) cylindrique, **en ce que** l'élément de tamis de distribution (33; 33b-e) ferme le porte-filtre (11) en plongeant à l'intérieur à la manière d'un piston et **en ce qu'**un joint d'étanchéité (36) qui agit de façon radiale est prévu entre l'élément de tamis de distribution (33a) et le porte-filtre (11).

6. Machine à café selon l'une des revendications 1 à 5, **caractérisée en ce que** les premiers moyens comprennent une chaudière (28) qui est équipée d'un dispositif de chauffage et qui est reliée de manière hydraulique aux deuxièmes moyens (33; 33a-e ; 41).

7. Machine à café selon la revendication 6, **caractérisée en ce que** la chaudière (28) est reliée par l'intermédiaire d'une pompe (31) à un raccord d'eau froide (29) pour produire la pression d'infusion.

8. Machine à café selon l'une des revendications 1 à 7, **caractérisée en ce qu'**il est prévu une commande centrale (24) qui commande le moulin à café (19), les premiers moyens (28, ..., 31) et éventuellement les deuxièmes moyens (33 ; 33a-d).

9. Procédé de fonctionnement la machine à café selon l'une des revendications 1 à 8, lequel procédé comportant les étapes suivantes :
a. placer un porte-filtre (11) vide dans le support (12), prévu à cet effet, de la machine à café (10) ;
b. moudre une portion de grains de café et remplir le porte-filtre (11) du café moulu ainsi (16) obtenu;
c. fermer de façon étanche à la pression le porte-filtre (11) avec les deuxièmes moyens (33 ; 33a-e ; 41) ;
d. pousser de l'eau chaude à travers le café moulu (16) enfermé dans le porte-filtre (11) ;
e. enlever et vider le porte-filtre (11).

10. Procédé selon la revendication 9, **caractérisé en ce que**, avant ou pendant la fermeture du porte-filtre (11) de manière étanche à la pression, le café moulu (16) présent dans le porte-filtre (11) est tassé.

11. Procédé selon la revendication 9 ou 10, **caractérisé en ce que** la poussée de l'eau chaude s'effectue au moyen d'un piston (41) agencé dans les deuxièmes moyens (33 ; 33a-e ; 41).

12. Procédé selon la revendication 9 ou 10, **caractérisé en ce que** la poussée de l'eau chaude s'effectue au moyen d'une pompe (31).

13. Procédé selon l'une des revendications 9 à 12, **caractérisé en ce que** les étapes comprises entre la mise en place d'un porte-filtre (11) vide et l'enlèvement et le vidage du porte-filtre (11) sont effectuées automatiquement au moyen d'une commande (24).
